Europäisches Patentamt

European Patent Office

Office européen des brevets

(19)

(11) Veröffentlichungsnummer: **0 216 153**
A2

(12) **EUROPÄISCHE PATENTANMELDUNG**

(21) Anmeldenummer: 86111557.4

(22) Anmeldetag: 21.08.86

(51) Int. Cl.⁴: **G 03 B 15/05**

(30) Priorität: 23.08.85 DE 8524204 U

(43) Veröffentlichungstag der Anmeldung:
01.04.87 Patentblatt 87/14

(84) Benannte Vertragsstaaten:
AT BE CH DE FR GB IT LI LU NL SE

(71) Anmelder: REGULA GmbH
Fabrikweg 12
D-7240 Horb(DE)

(72) Erfinder: Bossert, Herbert, Dipl.-Ing. (FH)
Oos-Strasse 7
D-7530 Pforzheim(DE)

(74) Vertreter: Frank, Gerhard, Dipl.-Phys.
Patentanwälte Dr. F. Mayer & G. Frank Westliche 24
D-7530 Pforzheim(DE)

(54) Blitzlichtgerät.

(57) Ein Blitzlichtgerät ist so ausgebildet, daß ihm ein Zweitblitzgerät funktionell zugeordnet werden kann, das mit dem Hauptblitzgerät zusammenarbeitet. Durch konstruktive räumliche Anpassung seiner Abmessungen kann das Zweitblitzgerät beispielsweise anstelle des Batteriedeckels über das Hauptblitzgerät geschoben werden, wodurch ein Doppel-Blitzlichtgerät gebildet werden kann, wenn die beiden Blitzgeräte untereinander synchronisiert sind.

REGULA GmbH, Fabrikweg 12, D-7240 Horb/Neckar

Blitzlichtgerät

Die Erfindung betrifft ein Blitzlichtgerät.

Für bestimmte Beleuchtungsprobleme, zum Beispiel indirektes Blitzen ist es zweckmäßig, außer dem Hauptblitzgerät noch ein zweites, in der Regel schwächeres, Zusatzgerät zu verwenden, um zum Beispiel unerwünschte Schattenpartien aufzuhellen. Hierfür ist die Anwendung eines zweiten Blitzgerätes bekannt. Solche Zweitblitzeinrichtungen werden auch als Zweitreflektor in das Hauptblitzgerät fest eingebaut.

Aufgabe der Erfindung ist es, ein Blitzlichtgerät so auszugestalten, daß es sowohl als konventionelles Einfach-Blitzgerät betrieben werden, als auch mit einem Zweitblitzgerät ausgerüstet werden kann.

Erfindungsgemäß wird diese Aufgabe dadurch gelöst, daß dem Blitzlichtgerät ein Zweitblitzgerät zugeordnet ist,

Insbesondere weist die Unterseite des Zweitblitzgerätes einen U-förmigen Querschnitt auf, so daß das Zweitblitzgerät schlittenartig anstelle des Batteriedeckels auf das Gehäuse des Blitzlichtgerätes aufschiebbar ist.

Dadurch ergibt sich eine besondere Anwendungsvielfalt des Blitzlichtgerätes:

Es kann in konventioneller Weise bei aufgesetztem Batteriedeckel
als einfaches Blitzlichtgerät verwendet werden, und es kann,
wenn anstelle des Batteriedeckels das Zweitblitzlichtgerät
aufgeschoben ist, als Doppel-Blitzlichtgerät verwendet werden.
Zum Synchronisieren bieten sich bei letzterer Möglichkeit wiederum
drei Varianten an:
Das Zweitblitzgerät kann durch den Hauptblitz ausgelöst werden
("Sklavenblitz"), dadurch besteht auch die Möglichkeit, daß
das Zweitblitzgerät auch räumlich getrennt vom Hauptblitzgerät
verwendet werden kann.

Alternativ kann das Zweitblitzgerät mit dem Hauptblitzgerät
oder der Kamera mit einem Synchronkabel verbunden werden, wozu
das Zweitblitzgerät einen Steckanschluß für ein derartiges
Synchronkabel aufweist.

Letztlich kann auch zwischen dem Zweitblitz und dem Hauptblitz
beim Einschieben des Zweitblitzes eine Kontaktverbindung automatisch hergestellt werden, worüber die Synchronisation erfolgt.
Hierzu weist dann das Zweitblitzgerät Synchronkontakte auf,
die in eingeschobenem Zustand korrespondierend angeordnete
Synchronkontakte im Hauptblitzlichtgerät beaufschlagen.

Außerdem ergibt sich hierdurch die Möglichkeit einer leichten
Nachrüstung. Alternativ kann dabei vorgesehen sein, daß das
Zweitblitzgerät eine eigene Stromversorgung hat oder aber die
Stromversorgung des Hauptblitzgerätes durch entsprechende Kopplung
an dessen Batterien mitbenutzt.

Anstelle des Lichtblitzes kann im Zweitblitzgerät auch ein
Infrarot-Lichtgeber zur Kamerablendensteuerung oder ein Rotlichtscheinwerfer zur Auslösung einer Autofocuseinrichtung bei Dunkelheit eingebaut sein, was den Anwendungsbereich des erfindungsgemässen Blitzlichtgerätes erweitert.

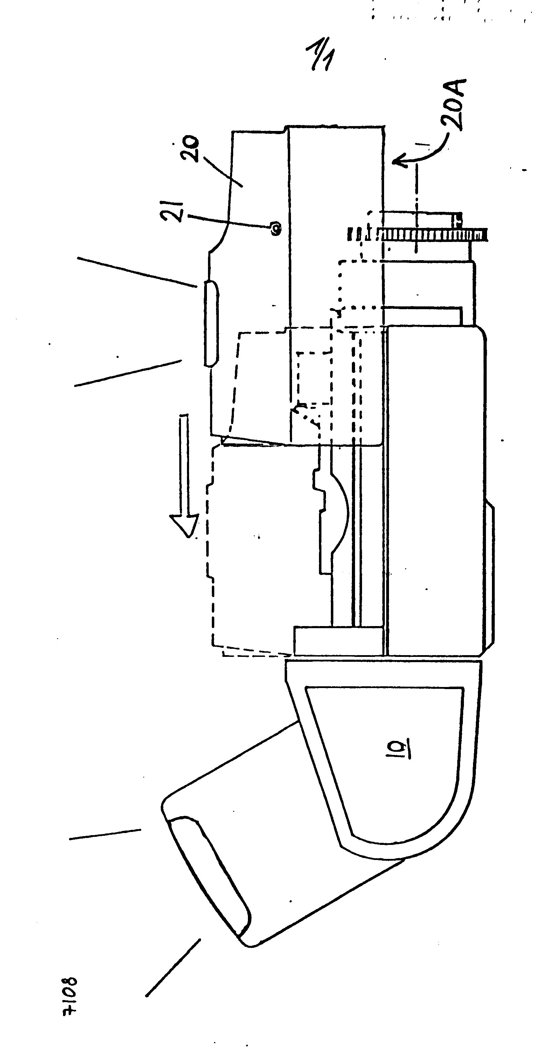

In der Figur ist das Hauptblitzlichtgerät 10 dargestellt, dessen Batteriedeckel entfernt worden ist, so daß man die entsprechenden Aufnahmevorrichtungen für die Batterien erkennen kann. Teilweise aufgeschoben und mittels entsprechender Führungsnuten auf dem Blitzlichtgerät geführt, ist ein Zweitblitzgerät 20, dessen Unterseite 20A mit im wesentlichen U-förmig ausgebildetem Querschnitt ausgestattet ist, in Übereinstimmung mit dem (nicht dargestellten) Batteriedeckel, der sonst die obere Abdeckung des Blitzlichtgerätes 10 bildet. Das Zweitblitzlichtgerät 20 wird in Pfeilrichtung auf das Blitzlichtgerät 10 eingeschoben, bis es die in gestrichelter Darstellung gezeigte Position erreicht hat und eine organische konstruktive Einheit mit dem Hauptblitzlichtgerät 10 bildet. Über einen Steckanschluß 21 kann ein Synchronkabel angeschlossen werden.

Schutzansprüche

1. Blitzlichtgerät, dadurch gekenzeichnet, daß an einer Front-
oder Seitenfläche des Gehäuses ein Zweitblitzgerät lösbar
anbringbar ist.

2. Blitzlichtgerät nach Anspruch 1, mit einem über den Batterien
aufbringbaren Deckel, dadurch gekennzeichnet, daß die Unterseite (20A) des Zweitblitzgeräts (20) der Formgebung des Batteriedeckels angepaßt ist.

3. Blitzlichtgerät nach Anspruch 2, dadurch gekennzeichnet, daß die
Unterseite (20A) des Zweitblitzgeräts (20) einen U-förmigen
Querschnitt aufweist und schlittenartig auf das Gehäuse des
Blitzlichtgerätes (10) (anstelle des Batteriedeckels) aufschiebbar ist.

4. Blitzlichtgerät nach Anspruch 2 und 3, dadurch gekennzeichnet,
daß das Zweitblitzgerät (20) Synchronkontakte aufweist, die in
eingeschobenem Zustand korrespondierend angeordnete Synchronkontakte mim Blitzlichtgerät (10) beaufschlagen.

5. Blitzlichtgerät nach Anspruch 1-4, dadurch gekennzeichnet, daß
das Zweitblitzgerät (20) einen Steckanschluß (21) für ein Synchronkabel aufweist.

0216153

20A

20

21

10